# EUROPEAN PATENT SPECIFICATION

(11) **EP 1 890 507 B1**
(45) Date of publication and mention of the grant of the patent: **04.01.2012**
(21) Application number: 06017246.7
(22) Date of filing: 18.08.2006
(51) Int. Cl.: H04W 24/06

(54) **System, mobile communication unit and method for testing a receiver performance**
System, Mobilkommunikationsgerät und Verfahren zum Testen der Empfänger-Eigenschaft
Système, dispositif de communication mobile et procédé pour tester la performance d'un récepteur

(43) Date of publication of application: 20.02.2008
(73) Proprietor: Rohde & Schwarz GmbH & Co. KG, 81671 München (DE)
(72) Inventor: Maucksch, Thomas, 83104 Tuntenhausen (DE)
(74) Representative: Körfer, Thomas

(56) References cited:
- WO-A-00/59250
- WO-A-00/69196
- WO-A-2005/074173
- WO-A1-01/06684
- DE-C1- 10 016 469
- US-A1- 2005 037 761
- "A GSM DIGITAL RADIO COMMUNICATIONS TEST SET" MICROWAVE JOURNAL, HORIZON HOUSE PUBLICATIONS, NORWOOD, MA, US, vol. 40, no. 5, May 1997 (1997-05), page 348,350,352, XP000737311 ISSN: 0192-6225

## Description

The invention regards a system and a method for testing a receiver performance and a respective mobile communication unit.

When the performance of a receiver of a mobile communication unit is tested it is often necessary to transmit information to the mobile communication unit under test and analyze the reaction of a respective mobile communication unit. The information transmitted to said communication unit contains for example a "power up" or "power down" information. In consequence of this information derived from a signal received by the mobile communication unit the parameter settings for the connection of the mobile communication unit with a base station are set.

The information that is given by the base station is included in a transmission signal which is transmitted in a downlink from the base station to the mobile communication unit. In order to achieve the information itself the transmission signal which is received by the mobile communication unit is analyzed and the information analysed from the received transmission signal builds the basis for setting new parameters by the mobile communication unit.

When such a mobile communication unit is tested a testing device is used for simulation of a base station for example. Information concerning the setting of parameters, broadcast or multicast information is transmitted from the testing device to the mobile communication unit by way of a unidirectional channel. Such unidirectional channels are established for any information which does not require a directly related data response by the mobile communication unit. In order to analyze the receiver performance with respect to such information the reaction of the mobile communication unit is therefore analyzed by the testing device by detecting particular parameters of an unrelated signal transmitted from the mobile communication unit to the testing device. Such "unrelated" signals do not contain the information which is analyzed from the received transmission signal received via the unidirectional channel but the information as detected by the mobile communication unit is reflected by any parameter or content of the signal which is transmitted from the mobile communication unit to the testing device. In case that the information that is originally generated by the testing device concerns for example the power settings of the mobile communication unit, any signal which is afterwards transmitted by the mobile communication device is analyzed by the testing device by measuring the power level of the signal transmitted by the communication unit.

Thus, an analysis of the receiver performance of such unidirectional channels in terms of the error rate is only possible by using statistical methods which means that a lot of transmission signals have to be transmitted to the mobile communication unit and consequently a lot of signals transmitted by the communication unit have to be measured and analyzed afterwards by the testing device.

Such testing algorithms are explained for example in the technical specification 3GPP TS34.121. Other examples for such unidirectional channels are a channel in which "ACK" and "NACK" bits are transmitted from the testing device to the mobile communication unit. The reaction of the mobile communication unit is to start a retransmission of already transmitted data if a NACK-signal is received. One problem of testing the reaction of the mobile communication unit is that competing processes may disturb the analysis of the reaction of the mobile communication unit. If for example the retransmission of a data packet is not successful even if the maximum number of retransmissions is achieved this results in transmitting a new data packet by the mobile communication unit although a "NACK" was received from the testing device.

It is even more difficult to analyze the receiver performance if the reaction of the mobile communication unit is ambiguous. This is the case for example if a serving cell and a non serving cell are both connected to the mobile communication unit via a unidirectional channel and transmit information concerning the allowed data volume per block. The different possibilities of combining "up", "hold" and "down" information by either of the two base stations result in a total of six different possibilities. Each of these six possibilities are associated with a well defined reaction of the mobile communication unit. But the mobile communication unit reacts only by either transmitting more data or by restricting the data transmission to a reduced amount of data. Therefore, it is only possible for the testing device to observe two reactions. Hence this receiver performance test is ambiguous by nature.

W0 01/06684 A1 shows a mobile communication unit, a test unit for bit error rate calculation and a testing device comprising a signal generator and a channel model. The signal generator provides an unfaded test signal to the channel model. The channel model in any case modifies the unfaded test signal generated by the signal generator and provides a faded modified signal to the mobile communication unit providing a recovered pseudorandom bit sequence to the test unit via a link. The link is only used for transmission of a recovered faded modified signal. The communication unit receives a faded modified signal, which is not the unfaded test signal generated by the signal generator, and transmits a recovered faded modified signal, which is not a recovered unfaded test signal generated by the signal generator. The bit comparison carried out in the test unit compares bits between the unfaded test signal and the recovered faded modified signal.

DE 100 16 469 C1 shows a method for measuring a bit error rate of wireless communication devices. For this purpose it is suggested to send back data from a testing device to the testing device by means of a loop-back-function.

It is an object of the invention, to provide a low error prone and light testing system and a method for testing a real receiver performance of the mobile communication unit allowing a direct and pinpoint analysis of the receiver performance for unidirectional channels.

The problem is solved by a system according to claim 1 and a method for testing a receiver performance according to claim 6.

According to the present invention a testing device which simulates at least one base station in communication connection to a mobile communication unit generates information to be transmitted to a mobile communication unit. The mobile communication unit is connected to the testing device by way of the unidirectional channel. The testing device generates a transmission signal including the information generated. The transmission signal is transmitted via the unidirectional channel and is received by the mobile communication unit.

The received transmission signal is analyzed by the mobile communication unit and the information resulting from the analysis of the received transmission signal is the basis for a backtransmission signal. Therefore, the received transmission signal is demodulated and decoded by the mobile communication unit and is backtransmitted to the testing device. The backtransmission signal is generated by the mobile communication unit on the basis of the information analyzed from the received transmission signal. The backtransmission signal is then transmitted by the mobile communication unit over an independent channel for backtransmission. The testing device receives the backtransmission signal over the independent channel and supplies both the original information and the information analyzed from the backtransmission signal to a comparison unit.

In order to realize such a test system the mobile communication unit comprises a loopback entity for connecting the receiving section of the mobile communication unit to a transmitting section and for controlling the transmitting section to transmit the information received over the unidirectional channel over the independent channel.

More precisely, a receiver performance of a mobile communication unit is tested using the unidirectional channel established between the testing device and the mobile communication unit, the unidirectional channel being provided for transmitting the information from the testing device to the mobile communication unit in the transmission signal, and the independent channel provided between the mobile communication unit and the testing device for transmitting the backtransmission signal generated from the information analyzed from the received transmission signal. The received transmission signal is provided by a system simulator of the testing device simulating at least a part of a regular base station that usually communicates with the mobile communication unit. The backtransmission signal is transmitted by the mobile communication unit and except for possible errors contains the information from the testing device. The communication unit comprises the loopback entity for looping back the information analyzed from the transmission signal. The testing device comprises the comparison unit for comparing the information transmitted over the unidirectional channel, which is provided by the system simulator of the testing device simulating at least a part of a regular base station that usually communicates with the mobile communication unit, and the information received over the independent channel for backtransmission.

The advantage of the new test system, the method of testing receiver performance in terms of error ratio and the new mobile communication unit is that the receiver performance can be tested directly without the need of analysing a reaction of the mobile communication unit. It is possible to compare the information analysed from the received transmission signal which would normally form the basis for a reaction of the mobile communication unit directly with the information originally generated by the testing device. This results eventually in a shorter testing time, as test time, consumed for the competing process need not to be excluded from the statistical evaluation. If the correct reaction of the mobile communication unit is the test target, time consuming repetitions for statistcal significance are not any more necessary.

Advantageous embodiments of the present invention are subject to the dependent claims.

It is especially advantageous to use an already existing independent channel for the backtransmission of the information analyzed from the received transmission signal. The use of an independent channel for backtransmission does not affect the unidirectional channel in any way. Furthermore, it is possible to use an independent channel with a very high quality in order to suppress any errors that occur during the backtransmission of the information from the mobile communication unit to the testing device.

In another advantageous embodiment an independent channel is established by the mobile communication unit for looping back the information analyzed from the received transmission signal.

Furthermore, it is an advantage to analyze in addition to the comparison of the returned information with the originally generated information the reaction of the mobile communication unit as well.

In particular if the mobile communication unit systematically performs erroneous settings according to a given information which may be analyzed directly from the transmission signal such systematic errors can be detected by analyzing the reaction of the mobile communication unit with respect to the returned information and its comparison with the originally generated information by the testing device.

Preferred embodiments of the present invention are illustrated in the drawings and are subsequently explained in detail.
- Fig. 1: shows a schematic overview over a system for testing a receiver performance according to a first embodiment;

- Fig. 2: shows a schematic overview over a second embodiment of the system for testing a receiver performance; and
- Fig. 3: shows a flow chart for testing a mobile communication unit according to the present invention.

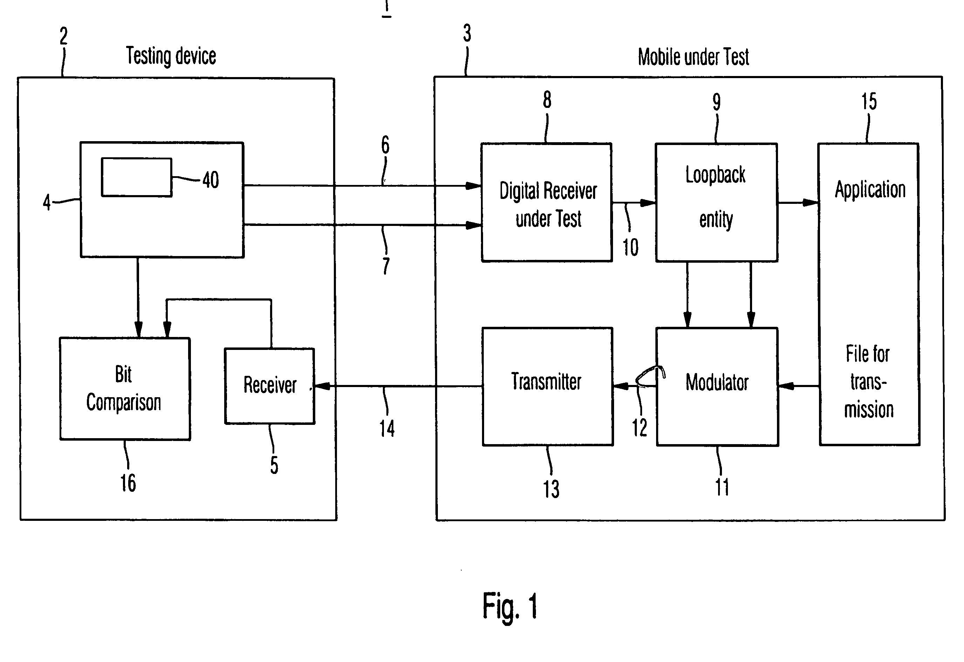

Fig. 1 shows a system 1 according to the present invention. The system 1 comprises a testing device 2 for testing a device under test which is in the illustrated embodiment a mobile communication unit 3 such as a cellular telephone. In order to establish a communication between the testing unit 1 and the mobile communication device 3 the testing device 1 comprises a system simulator 4 that simulates at least a part of a regular base station that usually communicates with a mobile communication unit 3.

In the illustrated embodiment the system simulator 4 comprises emulation units for simulating a serving cell and a non serving sell, both being connected to the mobile communication unit 3 by separate unidirectional channels 6, 7. Each of the unidirectional channels 6, 7 is provided for supplying the mobile communication unit 3 with information given by the serving cell and the non serving cell of the system simulator 4.

Such an information which is supplied by the testing device 1 to the mobile communication unit 3 is for example that in accordance with an available capability of a traffic channel the length of the data packets may be adapted in order to enlarge or reduce the data amount that can be transferred via the corresponding traffic channel.

According to the present invention the system simulator 4 comprises a generating unit 40 for generating the respective information which is to be transmitted from the testing device 1 to the mobile communication unit 3. When the information concerning the parameter settings of the mobile communication unit 3 are generated a transmission signal is generated including the information generated by the generating unit 40 of the system simulator 4. The generation of the transmission signal includes for example a"data volume per block"-down on one channel and a "data volume per block"-hold step.

The transmission signal is then transmitted by either of the unidirectional channels 6, 7 and is received by a digital receiver 8 under test. The digital receiver 8 under test is the unit of the mobile communication unit 3 which is to be tested by the present system 1 for testing receiver performance. When the receiver 8 receives a transmission signal by either of the unidirectional channels 6 or 7 the transmission signal is being analysed in order to obtain the information that was originally generated by the system simulator 4. The analysis of the transmission signal comprises for example a "data volume per block"-down step on one channel and a "data volume per block"-hold step. When the information is obtained which was transmitted by the transmission signal via the unidirectional channels 6 or 7 the information that is analyzed from the transmission signal is supplied to a loopback entity 9 which is connected to the receiver 8 that is to be tested.

The loopback entity 9 of the present invention is adapted to process two data packets with different information simultaneously, the two data packets being obtained from two transmission signals that where transmitted from the system simulator 4. Each of the transmission signals corresponds to an information of the serving cell and the non serving cell and is transmitted by either of the unidirectional channels 6 or 7. The treatment of the two data packets that are obtained by analyzing the received transmission signal are treated in parallel in order to keep the information distinguishable so that an analysis of an error rate can be performed in very detail. The information that was obtained by analysing the received transmission signal is then supplied to a modulator 11. The information is then the basis for generating a backtransmission signal. Thus, the information has to be modulated and a backtransmission signal is supplied by the modulator 11 via a connection line 12 to a transmitter 13. The transmitter 13 transmits back the backtransmission signal via an independent channel 14. The backtransmission signal which is transmitted via the independent channel 14 is received by the testing device 2. The testing device 2 thus comprises a receiver 5 for receiving the backtransmitted signal. The receiver 5 is furthermore adapted to analyze the received backtransmission signal thereby obtaining the information that was conveyed in the backtransmission signal. As the uplink which is in the illustrated embodiment the independent channel 14 is especially configured with respect to quality. It is assumed that the backtransmission of the backtransmission signal does not add any errors to the information that is obtained from the backtransmission signal. Thus, the information that is obtained by analyzing the backtransmission signal in the receiver 5 is assumed to be identical to the information that is obtained from the transmission signal or transmission signals in receiver 8 of the mobile communication unit 3.

An error rate that reflects the performance of receiver 8 can therefore be calculated after a comparison of the information obtained from the backtransmission signal in receiver 5 and the originally generated information of system simulator 4. The generated information and the information of the back transmission signal are compared to each other in the bit comparison unit 16.

In order to analyze the information that is obtained by the receiver 8 of the mobile communication unit 3 an independent channel 14 is used for backtransmission of the information obtained by the receiver 8. This independent channel 14 is called independent as it is usually not established or not used for looping back any information which is received via the unidirectional channels 6, 7. The information which is transferred to the mobile communication unit 3 by the unidirectional channels 6, 7 is normally terminated in the receiver 8 of the mobile communication unit 3. It results in setting parameters for example, a displaying information but without any transmission of information back from the mobile communication unit 3 to the testing device 2 or the base station during regular use.

Thus, an "independent channel 14" denotes a channel which is either used for transferring information received via a unidirectional channel 6, 7 or that is especially generated and established by the loopback entity 9.

The loopback entity 9 may either terminate the processing of the information obtained by the receiver 8 or in addition to looping back the information also further process or supply any application unit 15 with the obtained information for further processing. Such further processing application may be a display for example that displays the information included in the information of the transmission signal.

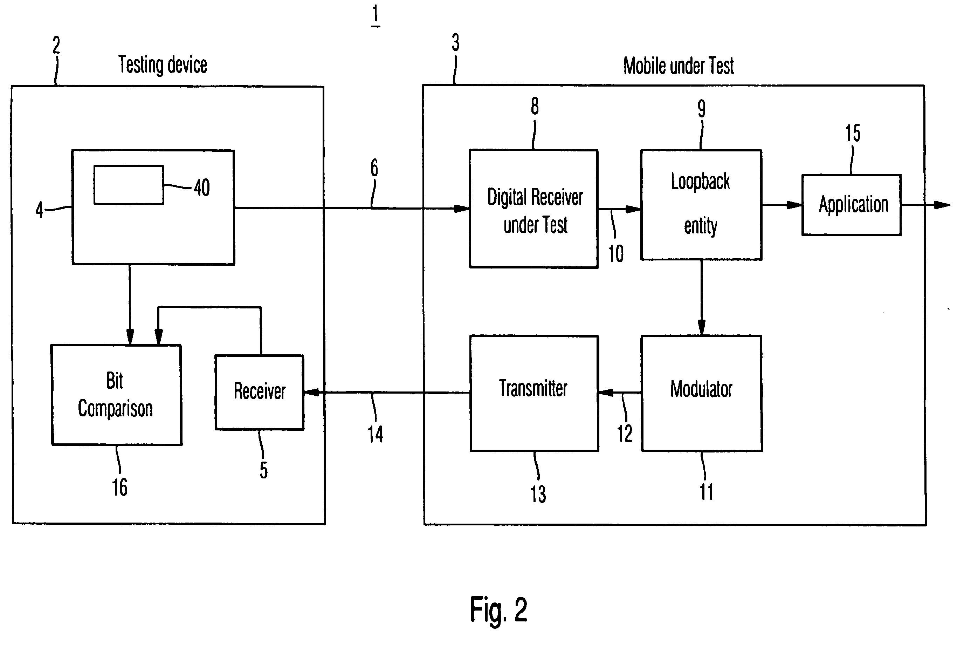

Another example is illustrated in Fig. 2.

Contrary to Fig. 1 the system simulator 4' of the testing device 2 of Fig. 2 is adapted for generating only one information which is transferred to the mobile communication device 3. Such an information that is transmitted from the testing device 2 to the mobile communication unit 3 is for example a "power up" or "power down" or an "ACK" or "NACK" bit. In the same way as it was illustrated with respect to Fig. 1 the information generated by the system simulator 4' is generated in accordance with the requirements of the relevant protocol and therefore a bit stream with data packets that contain the information to be transmitted is generated by a signal generator. This bit stream with the information to be transferred to the mobile communication unit 3 is then processed within the testing device 2. The transmission signal is generated and eventually transmitted. The transmission signal is transmitted via the unidirectional channel 6 and is received by receiver 8 as it has already been explained.

If the information which was generated by the signal generator of the system simulator 4' is a broadcast information for example, the information that is obtained by analysing the received transmission signal in receiver 8 may for example be forwarded to the respective application 15'. If the broadcast information is for example a cell information concerning tariff rate when calling to certain area codes, the information can be displayed by a display device. Displaying the information is not accessible to automatic testing. Thus, according to the present invention the information obtained from the received transmission signal in receiver 8 is looped back by a loopback entity 9. The information is supplied to modulator 11 that further forwards the modulated information which corresponds to a backtransmission signal via connection 12 to transmitter 13. The backtransmission signal is then transmitted back to the testing device 2 by the independent channel 14. The calculation of an error rate corresponds to the calculation as explained with respective Fig. 1.

In Fig. 1 and 2 the analysis of the error rate or more general the receiver performance is illustrated in a very general way. According to the present invention the loopback entity 9 may be located in any of the different levels of an OSI-reference model that reflects such a mobile communication unit 3.

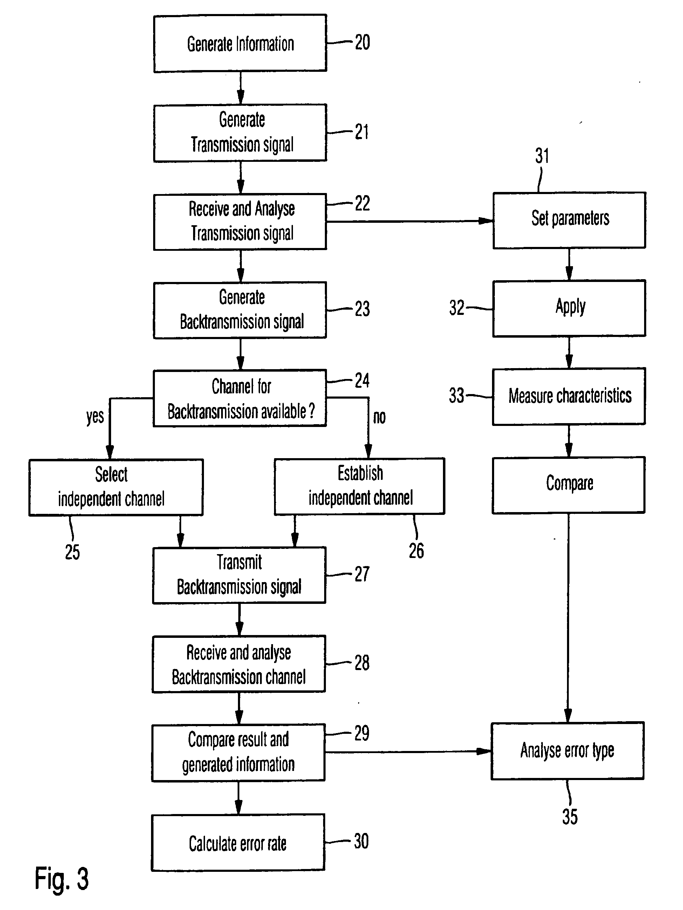

In Fig. 3 there is shown a flow chart for illustrating the inventive method again. First in step 20 the information to be transmitted from a testing device 2 to the mobile communication unit 3 under test is generated by a generating unit 40 of the testing device 2. On the basis of the generated information the transmission signal is generated in step 21. The generated transmission signal is then transmitted via a unidirectional channel 6 and is received by receiver 8 of the mobile communication unit 3.

Furthermore, the received transmission signal is analysed in order to obtain the information originally generated by the generating unit 40 of system simulator 4 or 4' of the testing device 2.

On the basis of the obtained information from the received and analysed transmission a backtransmission signal is being generated in step 23. Before the backtransmission signal can be transmitted back to the testing device 2 by the mobile communication unit 3 it is determined (step 24) if an independent channel 14 for backtransmission is available. If there is already established an independent channel 14 then the answer to the request is "yes" and an existing independent channel 14 is being selected. In case that there is more than one independent channel available for the backtransmission of the backtransmission signal an appropriate selection is performed.

If the answer to the request is "no" then a new independent channel 14 is established between the mobile communication unit 3 and the testing device 2.

If either an independent channel 14 is selected or newly established the backtransmission signal is transmitted back (step 27).

The back transmitted backtransmission signal is then received by receiver 5 of the testing device 2 and is being analyzed in order to obtain the information included in the backtransmission signal. After the backtransmission signal was received and analyzed by the receiver 5 in step 28 the result of the analysis of the backtransmission signal is compared to the originally generated information in the generating unit 40 of the system simulator 4 (step 29). Finally (step 30), an error rate is calculated from a counted number of errors that is known from the comparison of the obtained information from the backtransmission signal and the information originally generated in the signal generator of the system simulator 4, 4'.

The receiver performance test may either be limited to the method as it was just explained with respect to steps 20 - 30 but it furthermore may comprise an analysis of the reaction of the mobile communication unit 3 as well. For this purpose the parameters for example that are to be set after receiving a "power up" or "power down" information in the transmission signal are set in step 31. On the basis of the newly set parameters any information that is then transmitted from the mobile communication unit 3 to the testing device 2 and which may not be related to the originally generated information in any way can be analyzed by measuring in the explained example the power level of the signal which is transmitted from the mobile communication unit 3 to the testing device 2. Thus, the newly set parameters of step 31 are applied (step 32) to a power control unit of the mobile communication unit 3.

The characteristics of the signal which is transmitted from the mobile communication unit 3 to the testing device 2 is measured (step 33). In the given example the information originally generated in the testing device 2 results in an adaption of the transmission power of any signal which is transmitted from the mobile communication unit 3 back to the testing device 2. If the output power of the mobile communication unit 3 is measured by the testing device 2 the result of the measurement is then compared to an expectation value which is built on the basis of the originally generated information and a power level measured before. Based on the result of the comparison of the expectation value and the measured characteristic the type of error can be analysed in step 35.

The method and system for analysing a receiver performance and the mobile communication unit is not limited to the illustrated preferred embodiments but may also include a combination of single features thereof.

## Claims

1. System for testing a receiver performance of a mobile communication unit (3) with a unidirectional channel (6, 7) established between a testing device (2) and the mobile communication unit (3), the unidirectional channel (6, 7) being provided for transmitting information from the testing device (2) to the mobile communication unit (3) in a transmission signal,
**characterized in that** the mobile communication unit (3) and the testing device (2) are arranged to provide between them
an independent channel (14) for transmitting a backtransmission signal generated from the information analyzed from the received transmission signal, which is provided by a system simulator (4) of the testing device (2) adapted to simulate at least a part of a regular base station that is usually adapted to communicate with the mobile communication unit (3), by the mobile communication unit (3) and except for possible errors containing the information from the testing device (2) ; that the communication unit (3) comprises a loopback entity (9) for looping back the information analyzed from the transmission signal; and that the testing device (2) comprises a comparison unit (16) for comparing the information transmitted over the unidirectional channel (6, 7), which is provided by the system simulator (4) of the testing device (2) simulating at least a part of a regular base station that usually communicates with the mobile communication unit (3), and the information received over the independent channel (14) for backtransmission.

2. System according to claim 1,
**characterized in that**
the mobile communication unit (3) comprises a loopback entity (9) for looping back the information analyzed from the transmission signal in a backtransmission signal via an existing independent channel (14).

3. System according to claim 1,
**characterized in that**
the mobile communication unit (3) comprises a loopback entity (9) for establishing an independent channel (14) and for looping back the information analyzed from the transmission signal in a backtransmission signal via this independent channel (14).

4. System according to any of the preceding claims,
**characterized in that**
the testing device (2) comprises a measuring means for measuring characteristics of any signal transmitted by the mobile communication unit (3), the characteristics being a result of the information transmitted over the unidirectional channel (6, 7).

5. System according to claim 4,
**characterized in that**
the testing device (2) comprises a analyzing unit for analyzing a statistical calculation of errors and an output of the comparison unit (16).

6. Method for testing a receiver performance of a mobile communication unit (3) comprising the steps of:
generating an information (20) and a transmission signal (21) containing the information, which are provided by a system simulator (4) of a testing device (2) simulating at least a part of a regular base station that usually communicates with the mobile communication unit (3), by the testing device (2),
transmitting the transmission signal from the testing device (2) to a mobile communication unit (3) under test via a unidirectional channel (6, 7) between them,
receiving and analyzing (22) by the mobile communication unit the transmission signal for obtaining the information included in the transmission signal,
looping and transmitting back (27) to the testing device the information analyzed from the transmission signal and except for possible errors containing the information (20) by the mobile communication unit (3) under test in a backtransmission signal via a loopback entity (9) of the mobile communication unit (3) and an independent backtransmission channel (14),
receiving and analyzing (28) the backtransmission signal by the testing device (2) for obtaining the information included in the backtransmission signal and comparing the information analyzed from the backtransmission signal received over the independent channel with the generated information (20) transmitted over the unidirectional channel.

7. Method according to claim 6,
**characterized in that**
the independent backtransmission channel (14) is selected from any of already established channels (25) capable of transmitting data from the mobile communication unit (3) to a testing device (2).

8. Method according to claim 6,
**characterized in that**,
an independent backtransmission channel (14) is established (26) for transmitting the backtransmission signal from the mobile communication unit (3) to the testing device (2).

9. Method according to any of the claims 6 to 8,
**characterized in that**
a reaction of the mobile communication unit (3) upon analyzing the transmission signal is detected by the testing device (2) and compared to an expectation value.

## Patentansprüche

1. System zum Testen einer Empfängereigenschaft eines Mobilkommunikationsgeräts (3) mit einem in nur einer Richtung wirkenden Kanal (6, 7), der zwischen einer Testeinrichtung (2) und dem Mobilkommunikationsgerät (3) eingerichtet ist, wobei der in nur einer Richtung wirkende Kanal (6, 7) vorgesehen ist, um Information von der Testeinrichtung (2) zum Mobilkommunikationsgerät (3) in einem Übertragungssignal zu übertragen,
**dadurch gekennzeichnet, dass**
das Mobilkommunikationsgerät (3) und die Testeinrichtung (2) eingerichtet sind, um zwischen ihnen einen unabhängigen Kanal (14) vorzusehen, um ein Zurückübertragungssignal, welches von der Information erzeugt wird, welche vom empfangenen Übertragungssignal analysiert wird, welches durch einen Systemsimulator (4) der Testeinrichtung (2) bereitgestellt wird, welche eingerichtet ist, zumindest einen Teil einer regulären Basisstation zu simulieren, welche üblicherweise eingerichtet ist, mit dem Mobilkommunikationsgerät (3) zu kommunizieren, von dem Mobilenkommunikationsgerät (3) und abgesehen von möglichen Fehlern die Information von der Testeinrichtung (2) enthält, zu übertragen; dass das Kommunikationsgerät (3) ein Zurückschleifelement (9) aufweist, um die Information, welche von dem Übertragungssignal analysiert wird, zurückzuschleifen; und dass die Testeinrichtung (2) eine Vergleichseinheit (16) umfasst, die durch den Systemsimulator (4) der Testeinrichtung (2) bereitgestellt ist, welche zumindest einen Teil einer regulären Basisstation simuliert, welche üblicherweise mit dem Mobilkommunikationsgerät (3) kommuniziert, um die Information, welche über den in der einen Richtung wirkenden Kanal (6, 7) übertragen wird, und die Information zu vergleichen, welche zur Zurückübertragung über den unabhängigen Kanal (14) empfangen wird.

2. System nach Anspruch 1,
**dadurch gekennzeichnet, dass**
das Mobilkommunikationsgerät (3) ein Zurückschleifelement (9) umfasst, um die Information, welche vom Übertragungssignal analysiert wird, in einem Zurückübertragungssignal über einen existierenden unabhängigen Kanal (14) zurückzuschleifen.

3. System nach Anspruch 1,
**dadurch gekennzeichnet, dass**
das Mobilkommunikationsgerät (3) ein Zurückschleifelement (9) umfasst, um einen unabhängigen Kanal (14) einzurichten und um die Information, welche dem Übertragungssignal analysiert wird, in einem Zurückübertragungssignal über diesen unabhängigen Kanal zurückzuschleifen.

4. System nach einem der vorhergehenden Ansprüche,
**dadurch gekennzeichnet, dass**
die Testeinrichtung (2) eine Messeinrichtung umfasst, um Kenndaten irgendeines Signals, welches durch das Mobilkommunikationsgerät (3) übertragen wird, zu messen, wobei die Kenndaten ein Ergebnis der Information sind, welche über den in nur einer Richtung wirkenden Kanal (6, 7) übertragen wird.

5. System nach Anspruch 4,
**dadurch gekennzeichnet, dass**
die Testeinrichtung (2) eine Analyseeinheit umfasst, um eine statistische Berechnung von Fehlern und ein Ausgangssignal der Vergleichseinheit (16) zu analysieren.

6. Verfahren zum Testen einer Empfängereigenschaft eines Mobilenkommunikationsgeräts (3), welches folgende Schritte umfasst:
Erzeugen einer Information (20) und eines Übertragungssignals (21), welches die Information enthält, welche durch einen Systemsimulator (4) einer Testeinrichtung (2) bereitgestellt werden, welche zumindest einen Teil einer regulären Basisstation, welche üblicherweise mit dem Mobilkommunikationsgerät (3) kommuniziert, durch die Testeinrichtung (2) simuliert,
Übertragen des Übertragungssignals durch das Mobilkommunikationsgerät (3) von der Testeinrichtung (2) zu einem unter Test stehenden Mobilkommunikationsgerät (3) über einen in nur einer Richtung wirkenden Kanal (6, 7) zwischen diesen,
Empfangen und Analysieren (22) - durch das Mobilkommunikationsgerät (3) - des Übertragungssignals, um die Information, welche im Übertragungssignal enthalten ist, zu erlangen,
Zurückschleifen und Zurückübertragen (27) - zur Testeinrichtung (2) - der Information, welche vom Übertragungssignal analysiert wird und abgesehen von möglichen Fehlern die Information (20) von dem unter Test stehenden Mobilkommunikationsgerät (3) enthält, in einem Zurückübertragungskanal über ein Zurückschleifelement (9) des Mobilkommunikationsgeräts (3) und einen unabhängigen Zurückübertragungskanal (14),
Empfangen und Analysieren (28) des Zurückübertragungssignals durch die Testeinrichtung (2), um die Information, welche im Zurückübertragungskanal enthalten ist, zu erlangen und um die Information, welche vom Zurückübertragungssignal, welches über den unabhängigen Kanal empfangen wird, mit der erzeugten Information (20), welche über den in nur der einen Richtung wirkenden Kanal übertragen wird, zu vergleichen.

7. Verfahren nach Anspruch 6,
**dadurch gekennzeichnet, dass**
der unabhängige Zurückübertragungskanal (14) von irgendeinem der schon eingerichteten Kanäle (25) ausgewählt wird, der in der Lage ist, Daten vom Mobilkommunikationsgerät (3) zu einer Testeinrichtung (2) zu übertragen.

8. Verfahren nach Anspruch 6,
**dadurch gekennzeichnet, dass**
ein unabhängiger Zurückübertragungskanal (14) eingerichtet ist (26), um das Zurückübertragungssignal vom Mobilkommunikationsgerät (3) zur Testeinrichtung (2) zu übertragen.

9. Verfahren nach einem der Ansprüche 6 bis 8,
**dadurch gekennzeichnet, dass**
eine Reaktion des Mobilkommunikationsgeräts (3) beim Analysieren des Übertragungssignals durch die Testeinrichtung (2) erfasst wird und mit einem Erwartungswert verglichen wird.

## Revendications

1. Système pour tester une performance de récepteur d'une unité de communication mobile (3) avec une voie unidirectionnelle (6, 7) établie entre un dispositif de test (2) et l'unité de communication mobile (3), la voie unidirectionnelle (6, 7) étant pourvue pour transmettre des informations du dispositif de test (2) à l'unité de communication mobile (3) dans un signal de transmission,
**caractérisé en ce que** l'unité de communication mobile (3) et le dispositif de test (2) sont agencés pour fournir entre eux une voie indépendante (14) pour transmettre un signal de transmission retour généré à partir des informations analysées à partir du signal de transmission reçu, qui est fourni par un simulateur de système (4) du dispositif de test (2) adapté pour simuler au moins une partie d'une station de base normale qui est généralement adaptée pour communiquer avec l'unité de communication mobile (3), par l'unité de communication mobile (3) et à l'exception d'erreurs possibles contenant les informations en provenance du dispositif de test (2) ; **en ce que** l'unité de communication (3) comprend une entité de réinjection (9) pour réinjecter les informations analysées à partir du signal de transmission ; et **en ce que** le dispositif de test (2) comprend une unité de comparaison (16) pour comparer les informations transmises sur la voie unidirectionnelle (6, 7), qui sont fournies par le simulateur de système (4) du dispositif de test (2) simulant au moins une partie d'une station de base normale qui communique généralement avec l'unité de communication mobile (3), et les informations reçues sur la voie indépendante (14) pour une transmission retour.

2. Système selon la revendication 1,
**caractérisé en ce que**
l'unité de communication mobile (3) comprend une entité de réinjection (9) pour réinjecter les informations analysées à partir du signal de transmission dans un signal de transmission retour via une voie indépendante existante (14).

3. Système selon la revendication 1,
**caractérisé en ce que**
l'unité de communication mobile (3) comprend une entité de réinjection (9) pour établir une voie indépendante (14) et pour réinjecter les informations analysées à partir du signal de transmission dans un signal de transmission retour via cette voie indépendante (14).

4. Système selon l'une quelconque des revendications précédentes,
**caractérisé en ce que**
le dispositif de test (2) comprend un moyen de mesure pour mesurer des caractéristiques de tout signal transmis par l'unité de communication mobile (3), les caractéristiques étant un résultat des informations transmises sur la voie unidirectionnelle (6, 7).

5. Système selon la revendication 4,
**caractérisé en ce que**
le dispositif de test (2) comprend une unité d'analyse pour analyser un calcul statistique d'erreurs et une sortie de l'unité de comparaison (16).

6. Procédé pour tester une performance de récepteur d'une unité de communication mobile (3) comprenant les étapes consistant à :
générer une information (20) et un signal de transmission (21) contenant l'information, qui sont fournis par un simulateur de système (4) d'un dispositif de test (2) simulant au moins une partie d'une station de base normale qui communique généralement avec l'unité de communication mobile (3), par le dispositif de test (2),
transmettre le signal de transmission du dispositif de test (2) à une unité de communication mobile (3) soumise au test via une voie unidirectionnelle (6, 7) entre eux,
recevoir et analyser (22) par l'unité de communication mobile (3) le signal de transmission pour obtenir l'information incluse dans le signal de transmission,
réinjecter et transmettre (27) au dispositif de test l'information analysée à partir du signal de transmission et à l'exception d'erreurs possibles contenant l'information (20) par l'unité de communication mobile (3) soumise au test dans un signal de transmission retour via une entité de réinjection (9) de l'unité de communication mobile (3) et une voie de transmission retour indépendante (14),
recevoir et analyser (28) le signal de transmission retour par le dispositif de test (2) pour obtenir l'information incluse dans le signal de transmission retour et comparer l'information analysée à partir du signal de transmission retour reçu sur la voie indépendante avec l'information générée (20) transmise sur la voie unidirectionnelle.

7. Procédé selon la revendication 6,
**caractérisé en ce que**
la voie de transmission retour indépendante (14) est sélectionnée parmi l'une quelconque de voies déjà établies (25) capables de transmettre des données de l'unité de communication mobile (3) à un dispositif de test (2).

8. Procédé selon la revendication 6,
**caractérisé en ce que**
une voie de transmission retour indépendante (14) est établie (26) pour transmettre le signal de transmission retour de l'unité de communication mobile (3) au dispositif de test (2).

9. Procédé selon l'une quelconque des revendications 6 à 8,
**caractérisé en ce que**
une réaction de l'unité de communication mobile (3) lors de l'analyse du signal de transmission est détectée par le dispositif de test (2) et comparée à une valeur d'espérance.
